# DEMANDE DE BREVET EUROPEEN

(11) **EP 2 837 894 A1**
(43) Date de publication de la demande: **18.02.2015**
(21) Numéro de dépôt: 14180420.3
(22) Date de dépôt: 08.08.2014
(51) Int. Cl.: F24D 3/08, F24D 3/18, F24D 11/02, F24D 19/10, F24H 9/20, F28D 20/00

(54) **Installation de chauffage d'un circuit d'eau sanitaire et d'un circuit d'eau de chauffage pour une habitation**

(30) Priorité: 08.08.2013 FR 1357880
(71) Demandeur: ACE SAS, 78280 Guyancourt (FR)
(72) Inventeur: Allard-Latour, Franck, 69570 DARDILLY (FR)
(74) Mandataire: Gaillarde, Frédéric F. Ch.

(57) **Abrégé**

Installation de chauffage d'un circuit d'eau sanitaire (15, 31) et d'un circuit d'eau de chauffage (17, 19) pour une habitation, comprenant :
- au moins une pompe à chaleur (23),
- au moins un ballon d'eau chaude sanitaire (25) apte à être raccordé audit circuit d'eau sanitaire (15, 31), comprenant un échangeur eau/eau (27),
- un circuit d'eau primaire (21), comprenant une vanne à trois voies (35) disposée en aval de ladite pompe à chaleur (23) et en amont dudit échangeur (27), et apte à être raccordée audit circuit d'eau de chauffage (17),
- un réchauffeur électrique (39) placé dans ledit circuit d'eau primaire (21), entre ladite pompe à chaleur (23) et ladite vanne à trois voies (35), et
- des moyens de commande (49) de ladite vanne à trois voies (35) et dudit réchauffeur électrique (39) en fonction des besoins de chauffage de l'eau sanitaire et de l'eau de chauffage.

## Description

La présente invention se rapporte à une installation de chauffage d'un circuit d'eau sanitaire et d'un circuit d'eau de chauffage pour une habitation.

Comme cela est connu en soi, on peut utiliser une ou plusieurs pompes à chaleur pour réaliser ce chauffage.

Une telle pompe à chaleur prend en général la forme d'une unité destinée à être placée à l'extérieur de l'habitation, et comprend notamment :
- un échangeur air/fluide, appelé évaporateur, qui prélève des calories dans l'air extérieur grâce à l'évaporation d'un fluide frigorigène, et
- un échangeur fluide/eau, appelé condenseur, qui permet de transférer par condensation les calories du fluide frigorigène à un circuit d'eau communiquant d'une part avec un ou plusieurs ballon(s) d'eau chaude sanitaire, et d'autre part avec un circuit d'eau de chauffage.

Un compresseur par exemple rotatif et un détendeur permettent d'imposer au fluide frigorigène ces cycles d'évaporation/condensation, couramment appelés cycles de Carnot.

Classiquement, une telle installation comprend en outre des moyens additionnels de chauffage d'appoint d'une part de l'eau sanitaire, et d'autre part de l'eau de chauffage.

Ces moyens de chauffage d'appoint se présentent en général sous la forme d'une part d'une résistance électrique pour le chauffage de l'eau sanitaire, disposée à l'intérieur du ballon d'eau chaude, et d'autre part d'une résistance électrique pour le chauffage de l'eau de chauffage, pouvant être disposée à l'intérieur de la pompe à chaleur.

Une telle installation, faisant intervenir deux résistances dont les caractéristiques sont en général très différentes, est assez complexe à gérer. De plus, les besoins en eau chaude sanitaire et de chauffage de l'habitation peuvent conduire à des fonctionnements simultanés des deux résistances, ce qui est fortement consommateur de puissance électrique et contraire aux préconisations de la réglementation en vigueur, et notamment celle de la RT2012 en France.

La présente invention a ainsi notamment pour but de fournir une installation du type susmentionné, de conception plus simple et moins consommatrice d'effet Joule.

On atteint ce but de l'invention avec une installation de chauffage d'un circuit d'eau sanitaire et d'un circuit d'eau de chauffage pour une habitation, comprenant :
- au moins une pompe à chaleur,
- au moins un ballon d'eau chaude sanitaire apte à être raccordé audit circuit d'eau sanitaire, comprenant un échangeur eau/eau,
- un circuit d'eau primaire, comprenant une vanne à trois voies disposée en aval de ladite pompe à chaleur et en amont dudit échangeur, et apte à être raccordée audit circuit d'eau de chauffage,
- un réchauffeur électrique placé dans ledit circuit d'eau primaire, entre ladite pompe à chaleur et ladite vanne à trois voies, et
- des moyens de commande de ladite vanne à trois voies et dudit réchauffeur électrique en fonction des besoins de chauffage de l'eau sanitaire et de l'eau de chauffage.

Les apports en chauffage de l'habitation étant réduits compte tenu de l'isolation poussée du bâti et des nouvelles contraintes de la RT2012, le dimensionnement desdites résistances peut être réduite.

Grâce à ces caractéristiques, on peut utiliser une seule source de chauffage électrique, placée en amont de la vanne à trois voies, pour apporter un appoint de chauffage au ballon d'eau chaude sanitaire, et/ou au circuit d'eau de chauffage.

Ceci intervient lorsque la chaleur transmise par la pompe à chaleur au circuit d'eau primaire est insuffisante pour pourvoir aux besoins de chauffage de l'eau sanitaire et/ou de l'eau de chauffage.

L'utilisation d'une seule source de chauffage électrique, commandée de manière appropriée, permet de réduire le bilan énergétique de l'installation et de satisfaire aux nouvelles normes énergétiques en vigueur.

De plus, l'installation selon l'invention permet de couvrir au moins partiellement les besoins en eau chaude sanitaire et en eau de chauffage en cas de défaillance de la pompe à chaleur, le réchauffeur électrique remplissant alors la fonction de source de chaleur commune pour ces eaux.

Suivant une caractéristique optionnelle, l'installation selon l'invention peut comprendre en outre un ballon tampon relié à ladite pompe à chaleur par ledit circuit d'eau primaire, et destiné à être connecté en aval dudit circuit d'eau de chauffage : ce ballon tampon permet de réduire l'impact des cycles de dégivrage de l'évaporateur sur la température d'eau de chauffage.

La présente invention se rapporte également à une unité de commande pour une installation conforme à ce qui précède, comprenant :
- ledit réchauffeur électrique,
- un module électronique de commande,
- des moyens de raccordement électrique au secteur, à ladite pompe à chaleur, à ladite vanne à trois voies, à une sonde thermique placée à l'intérieur dudit ballon d'eau chaude, et à un terminal de commande, et
- des moyens de raccordement fluide à ladite pompe à chaleur et à ladite vanne à trois voies.

Une telle unité de commande permet de réunir de manière compacte l'ensemble des fonctionnalités nécessaires au pilotage de l'installation selon l'invention. Cette fonctionnalité peut également être installé dans la pompe à chaleur

La présente invention se rapporte également à un ballon d'eau chaude sanitaire pour une installation conforme à ce qui précède, incorporant une unité de commande conforme à ce qui précède : ceci permet de limiter le nombre d'appareils à installer lors de la mise en place d'une installation selon l'invention.

Suivant une caractéristique optionnelle, la présente invention se rapporte également à un ensemble comprenant un ballon d'eau chaude sanitaire conforme à ce qui précède, et un ballon tampon placé sous ce ballon d'eau chaude.

D'autres caractéristiques et avantages de la présente invention apparaîtront à la lecture de la description qui va suivre, et à l'examen des figures ci-annexées, dans lesquelles :
- la figure 1 représente une vue générale en perspective d'une habitation équipée d'une installation de chauffage selon l'invention,
- la figure 2 représente le schéma hydraulique de l'installation de la figure 1,
- la figure 3 est une vue en perspective d'un ensemble comprenant un ballon d'eau chaude sanitaire, un ballon tampon et une unité de commande, cet ensemble faisant partie de l'installation selon l'invention,
- la figure 4 est une vue de l'unité de commande de la figure 3, le capot de celle-ci ayant été ôté, et
- la figure 5 est une vue schématique des connections électriques de l'unité de commande de la figure 4 aux autres éléments de l'installation selon l'invention.

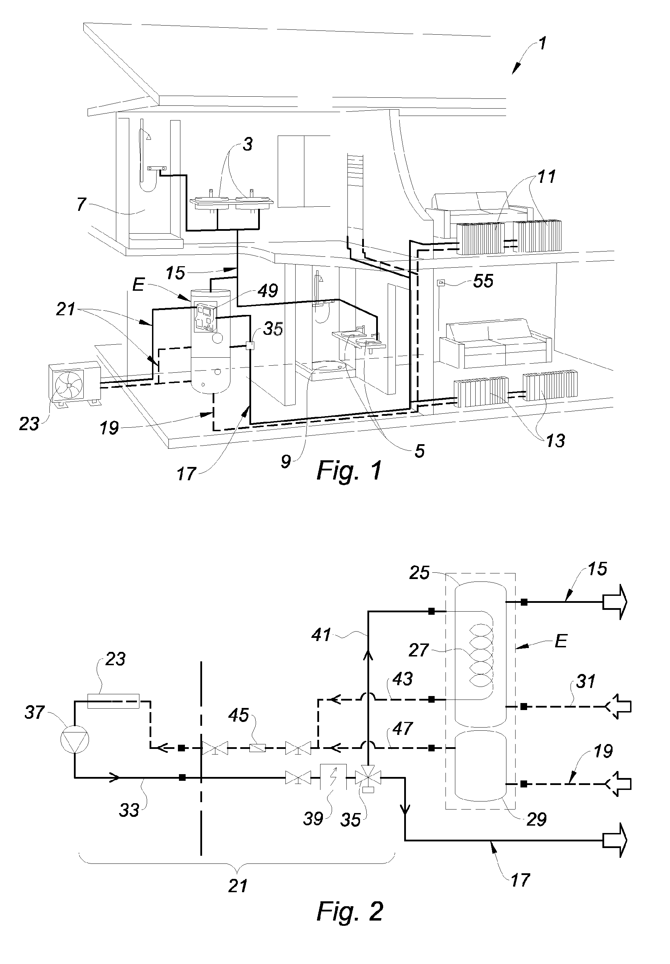

On se reporte à présent à la figure 1, sur laquelle on a représenté une habitation 1 comprenant différents appareils sanitaires tels que des lavabos 3, 5 et des douches 7, 9, ainsi que différents appareils de chauffage tels que des radiateurs à eau chaude 11, 13.

Les appareils sanitaires 3, 5, 7, 9 sont alimentés notamment en eau chaude par un circuit d'eau chaude sanitaire 15 représenté en trait continu.

Les appareils de chauffage 11, 13 sont alimentés par un circuit d'eau de chauffage comprenant des canalisations d'alimentation en eau chaude 17 représentées en trait continu est des canalisations de retour 19 représentées en trait discontinu.

Les circuits d'eau sanitaire 15 et d'eau de chauffage 17, 19 sont reliés à un ensemble E qui sera détaillé dans ce qui suit, lequel est lui-même relié par un circuit d'eau primaire 21 à une pompe à chaleur 23 placée à l'extérieur de l'habitation 1.

En se reportant à présent plus spécifiquement à la figure 2 on peut voir que l'ensemble E comprend un ballon d'eau chaude sanitaire 25 à l'intérieur duquel se trouve un échangeur eau/eau 27.

De manière préférée l'ensemble E comprend également un ballon d'eau tampon 29.

Le ballon d'eau chaude sanitaire 25 communique avec le circuit d'eau sanitaire 15, et est alimenté en eau froide 31 par l'eau provenant du réseau de distribution municipal ou bien d'un forage.

Le circuit d'eau primaire 21 comprend une canalisation d'alimentation en eau chaude 33 reliant la pompe à chaleur 23 à une vanne à trois voies 35.

Cette canalisation 33 traverse une pompe 37 et un réchauffeur électrique 39, ce dernier étant placé immédiatement en amont de la vanne à trois voies 35.

À titre d'exemple, le réchauffeur électrique peut fournir une puissance de chauffage de l'ordre de 2000 kW.

Une canalisation 41 d'alimentation en eau chaude relie la vanne à trois voies 35 à l'échangeur 27 du ballon d'eau chaude sanitaire 25.

La vanne à trois voies 35 est par ailleurs reliée au circuit 17 d'alimentation en eau de chauffage.

Une canalisation 43 assure le retour de l'eau provenant de l'échangeur 27 vers la pompe à chaleur 23, en traversant un filtre 45 pouvant être inclus dans la pompe à chaleur 23.

Le circuit de retour en eau de chauffage 19 est quant à lui connecté au ballon d'eau tampon 29, communiquant lui-même par une canalisation 47 avec la pompe à chaleur 23, en traversant également le filtre 45.

Le mode de fonctionnement de cette installation est le suivant.

Le liquide qui circule dans toutes les canalisations du circuit primaire est de l'eau pouvant être glycolée à 30%. Le liquide qui circule dans toutes la canalisations d'eau sanitaire est de l'eau.

Le sens de circulation de cette eau est indiqué par les flèches sur les différentes canalisations.

La pompe à chaleur 23 permet de chauffer l'eau du circuit primaire 21.

La pompe 37, inclus dans la pompe à chaleur 23, permet de mettre en circulation cette eau chauffée dans le circuit primaire 21, et ainsi de la diriger vers le réchauffeur 39 et vers la vanne à trois voies 35.

La vanne à trois voies 35 est pilotée de manière à assurer une circulation de cette eau chaude dans l'échangeur 27 ou dans le circuit de chauffage 17, 19, en fonction des besoins en eau chaude sanitaire et en eau de chauffage, tel qu'exprimé par les occupants de l'habitation 1.

Si le niveau de chauffage produit par la pompe à chaleur 23 n'est pas suffisant pour satisfaire à l'un et/ou l'autre de ces besoins, on met en route le réchauffeur 39, de manière à produire le surcroît de chaleur nécessaire pour chauffer l'eau sanitaire et/ou les radiateurs 11, 13.

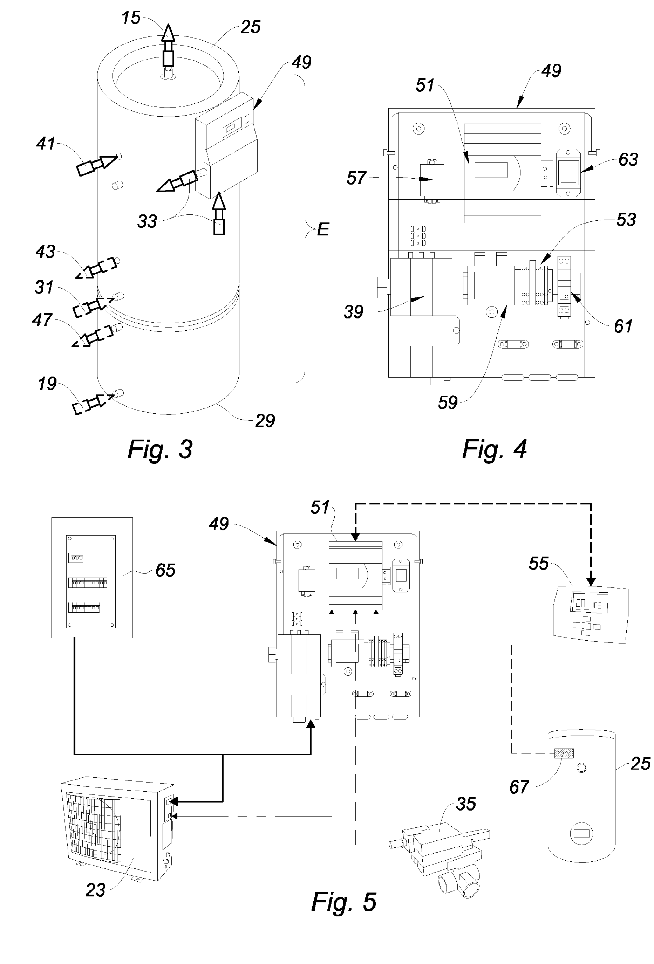

Concrètement, le pilotage de la vanne à trois voies 35 et du réchauffeur 39 s'effectue au moyen d'une unité de commande 49 fixée sur le ballon d'eau chaude sanitaire, tel que visible à la figure 3.

On notera également que, comme cela est représenté sur la figure 3, le ballon d'eau chaude sanitaire 25 et le ballon d'eau tampon 29 sont de préférence superposés, de manière à fournir un ensemble très compact.

On peut voir sur la figure 3 les départs et arrivées d'eau, dont les références correspondent à celles indiquées sur les canalisations de la figure 2.

On peut en particulier voir sur cette figure 3 que la canalisation d'alimentation en eau chaude 33 pénètre dans et ressort de l'unité de commande 49.

Comme cela est en effet visible sur la figure 4, cette unité de commande 49 incorpore le réchauffeur 39.

Cette unité de commande comprend par ailleurs d'autres éléments, parmi lesquels un module électronique de commande 51, un bornier 53 de raccordement de l'unité de commande au secteur, à la pompe à chaleur 23, à la vanne à trois voies 35, à une sonde thermique 67 placée à l'intérieur du ballon d'eau chaude sanitaire 25, et à un terminal de commande du chauffage 55 visible sur les figures 1 et 5.

L'unité de commande 49 comprend par ailleurs un relai 57 pour le chauffage d'appoint 39, un transformateur 59 d'alimentation électrique du régulateur, une protection électrique 61 de cette unité de commande, et un interrupteur de secours 63 servant à forcer le mode secours en cas de défaillance de la pompe a chaleur, une intervention manuelle est demandé pour sensibilisé le client à la panne).

La figure 5 représente de manière schématique les liaisons électriques de l'unité de commande 49 avec les différents éléments de l'installation selon l'invention.

Le secteur 65 alimente en puissance la pompe à chaleur 23 et l'unité de commande 49.

Le terminal 55, relié électriquement au module de commande 51, permet aux occupants de l'habitation 1 de fixer les consignes de fonctionnement pour les radiateurs 11, 13.

Le module de commande 49 communique par ailleurs électriquement avec la sonde de température 67 placée à l'intérieur du ballon d'eau chaude sanitaire 25, avec la vanne à trois voies 35, et avec une carte électronique disposée à l'intérieur de la pompe à chaleur 23, est supervisant le fonctionnement de cette dernière.

Comme cela résulte de la description qui précède, l'installation selon l'invention permet, avec un seul réchauffeur électrique disposé juste en amont de la vanne à trois voies 35, d'apporter l'appoint de chaleur nécessaire pour le fonctionnement du ballon d'eau chaude sanitaire 25 et/ou du circuit d'eau de chauffage 17, 19.

Le pilotage de ce réchauffeur 39 et de cette vanne à trois voies 35 assuré par le module électronique de commande 51 en fonction des consignes imposées par les occupants de l'habitation 1, permet d'assurer une gestion optimale des flux d'eau chaude en fonction des besoins exprimés par ces occupants.

Le fait d'utiliser un seul réchauffeur électrique judicieusement placé dans le circuit d'eau primaire 21, permet de faire des économies d'énergie sensibles par rapport aux systèmes de la technique antérieure dans lesquels plusieurs résistances électriques étaient utilisées.

On notera de plus qu'en cas de défaillance de la pompe à chaleur 23, le réchauffeur 39 peut pallier au moins en partie le déficit de chaleur, et couvrir au moins partiellement les besoins en eau chaude sanitaire et en eau de chauffage.

Bien entendu, la présente invention n'est nullement limitée au mode de réalisation décrit et représenté fourni à titre de simple exemple.

## Revendications

1. Installation de chauffage d'un circuit d'eau sanitaire (15, 31) et d'un circuit d'eau de chauffage (17, 19) pour une habitation (1), comprenant :
- au moins une pompe à chaleur (23),
- au moins un ballon d'eau chaude sanitaire (25) apte à être raccordé audit circuit d'eau sanitaire (15, 31), comprenant un échangeur eau/eau (27),
- un circuit d'eau primaire (21), comprenant une vanne à trois voies (35) disposée en aval de ladite pompe à chaleur (23) et en amont dudit échangeur (27), et apte à être raccordée audit circuit d'eau de chauffage (17),
- un réchauffeur électrique (39) placé dans ledit circuit d'eau primaire (21), entre ladite pompe à chaleur (23) et ladite vanne à trois voies (35), pour apporter un appoint de chauffage, et
- des moyens de commande (49) de ladite vanne à trois voies (35) et dudit réchauffeur électrique (39) en fonction des besoins de chauffage de l'eau sanitaire et de l'eau de chauffage.

2. Installation selon la revendication 1, comprenant en outre un ballon tampon (29) relié à ladite pompe à chaleur (23) par ledit circuit d'eau primaire (21), et destiné à être connecté en aval dudit circuit d'eau de chauffage (19).

3. Ensemble comportant une installation conforme à l'une des revendications 1 ou 2 et une unité de commande (49) de ladite installation, l'ensemble comprenant :
- ledit réchauffeur électrique (39),
- un module électronique de commande (51),
- des moyens de raccordement électrique (53) au secteur (65), à ladite pompe à chaleur (23), à ladite vanne à trois voies (35), à une sonde thermique (67) placée à l'intérieur dudit ballon d'eau chaude (25), et à un terminal de commande (55), et
- des moyens de raccordement fluide à ladite pompe à chaleur (23) et à ladite vanne à trois voies (35).

4. Ballon d'eau chaude sanitaire (25) pour une installation conforme à l'une des revendications 1 ou 2, incorporant un ensemble conforme à la revendication 3.

5. Ensemble comprenant un ballon d'eau chaude sanitaire (25) conforme à la revendication 4, et un ballon tampon (29), par exemple placé sous ce ballon d'eau chaude sanitaire.
